# EUROPEAN PATENT SPECIFICATION

(11) **EP 3 760 324 B1**
(45) Date of publication and mention of the grant of the patent: **08.11.2023**
(21) Application number: 20179844.4
(22) Date of filing: 12.06.2020
(51) Int. Cl.: B08B 3/02, B08B 13/00, F26B 21/00

(54) **CLEANING APPARATUS**
REINIGUNGSVORRICHTUNG
APPAREIL DE NETTOYAGE

(30) Priority: 05.07.2019 JP 2019126289; 02.08.2019 JP 2019143283
(43) Date of publication of application: 06.01.2021
(73) Proprietor: Sugino Machine Limited, Namerikawa City, Toyama 936-8577 (JP)
(72) Inventor: KAWAMORI, Yoshiteru, Uozu City, Toyama 9378511 (JP); MITSUE, Toyoaki, Uozu City, Toyama 9378511 (JP)
(74) Representative: Global IP Europe Patentanwaltskanzlei

(56) References cited:
- EP-A2- 1 145 774
- CN-A- 103 586 237
- DE-A1-102007 016 120
- DE-A1-102007 027 568
- DE-U1-202019 105 406
- JP-B2- 5 432 943
- US-A- 4 893 642
- US-A1- 2007 007 365

## Description

### BACKGROUND

### 1. Technical Field

The present invention relates to a cleaning apparatus. 2. Description of the Background

A cleaning apparatus has been proposed which includes a quill, a center post fixed to the quill, a turret head pivotally disposed on the center post, a tool support member disposed on the turret head, a cleaning tool rotatably disposed on the tool support member, a spindle, and a joint device (Japanese Patent No. 5,432,943).

There has also been proposed a cleaning apparatus in which a workpiece is placed on a cleaning table and clamped (Sugino Machine Co., Ltd., catalog "JCC series Jet Clean Center Series of General-purpose High-Efficiency Cleaning Systems", catalog No. Q2426N, pages 8 and 12). DE 20 2019 105 406 U1 describes a cleaning device comprising a closure plate having a mounting surface and a frame body; a support body; a shower moving device; a nozzle; a decompression retainer; a holder moving means and a decompression pump.
EP 1 145 774 A2 discloses cleaning apparatus comprising a lifter arranged in the cleaning chamber, the lifter configured to move a top plate (F) between an upper cleaning position and a lower retracted position and a cleaning method comprising moving a top plate (F) to a retracted position before rotating a workpiece; and unclamping the workpiece by moving the top plate (F) to the cleaning position.
DE 10 2007 016 120 A1 describes a method for cleaning and for the subsequent transport of preferably metallic workpieces after their manufacture. The workpieces are transported to a cleaning position by a first transport system, cleaned there and subsequently transferred to a second transport system.
JP 5432943 B2 relates to a washing/cleaning apparatus which is a turret-type washing/cleaning apparatus which arranges the turret turning motor and the spindle motor outside the washing chamber.
DE 10 2007 027 568 A1 describes a device for the automated cleaning of components with a complex shape of the areas to be cleaned in a cleaning machine, whereby at least one machining or cleaning tool is used. The device has at least one opening in a wall for the insertion of the component and/or the at least one cleaning tool and a support unit with at least two axially spaced centering support ends.
CN 103586237 A discloses a cable pipeline dredging device which is composed of a front-arranged flange and a rear-arranged flange.
US 2007/0007365 A1 describes an internal cleaning apparatus including a rotary shaft which, having a liquid flow passage, is provides so as to be axially rotatable, a revolving rotary shaft which, having a liquid flow passage connected to the liquid flow passage and being provided in a direction substantially perpendicular to the rotary shaft, is installed so as to be revolvable about the rotary shaft and axially rotatable.
US 4,893,642 discloses an apparatus for cleaning/deburring manufactured parts, each part having an established axis of rotation, includes a conveyor operable to convey the parts in succession in intermittent step-by-step movement to a cleaning/deburring station and a drying station.

### BRIEF SUMMARY

An object of the present invention is to provide a cleaning apparatus capable of clamping an axially extending workpiece such as a crankshaft on a center axis, and cleaning an end portion and a shaft portion of the workpiece.

A first aspect of the present invention is, in accordance with claim 1, a cleaning apparatus of cleaning a workpiece, the cleaning apparatus including:
a cleaning chamber having a first side wall and a second side wall located opposite to the first side wall;
a top plate arranged in the cleaning chamber;
a lifter arranged in the cleaning chamber, the lifter configured to move the top plate between an upper cleaning position and a lower retracted position;
a first slide shaft, the first slide shaft configured to reciprocate along a cleaning axis;
a first clamp shaft supported in the first slide shaft in a rotatable manner around the cleaning axis, the first clamp shaft configured to abut the workpiece;
a first clamp drive device configured to reciprocate the first slide shaft;
a motor configured to rotate the first clamp shaft;
a second clamp drive device configured to reciprocate the second slide shaft; and
a cleaning nozzle arranged in the cleaning chamber;
wherein
the first slide shaft is arranged through the first side wall;
and the cleaning apparatus comprises
a second slide shaft arranged through the second side wall, the second slide shaft configured to reciprocate along the cleaning axis;
a second clamp shaft supported in the second slide shaft in a rotatable manner around the cleaning axis, the second clamp shaft configured to abut the workpiece;
a guide shaft arranged to the top plate, the guide shaft extending in a left-right direction;
a first journal block configured to move on the guide shaft;
a first block drive cylinder arranged to the top plate, the first block drive cylinder configured to drive the first journal block;
a second journal block configured to move on the guide shaft; and
a second block drive cylinder arranged to the top plate, the second block drive cylinder configured to drive the second journal block.

The axially extending workpieces are, for example, crankshafts for motor vehicles and camshafts for motor vehicles.

Preferably, in the cleaning position, the center axis of the workpiece is aligned with the cleaning axis.

The slide shaft has a hollow prismatic shape or a hollow cylindrical shape.

Cleaning includes deburring by a liquid jet. For example, the cleaning apparatus removes burrs at both ends of the polishing surface of the workpiece and at the intersection of the oil holes, and removes foreign matter such as chips and polishing debris adhering to the holes and the surface of the workpiece.

The guide bush has a hollow prismatic shape or a hollow cylindrical shape. The slide shaft slides inside the guide bush.

Instead of the combination of the slide shaft and the guide bush, a combination of the slide shaft and the linear motion guide, or a combination of the slide shaft, the guide bush, and the linear motion guide may be used.

The linear motion guide is, for example, a linear guide or a ball spline.

The clamp cylinder is, for example, an air cylinder or an electric cylinder.

The clamp shaft may have a center pin. The center pin is arranged at the end (distal end) on the workpiece side of the clamp shaft. The center pin is arranged on the cleaning axis. Further, the first clamp shaft may include a phase pin. The phase pin is located at the distal end of the clamp shaft offset from the cleaning axis.

The lift cylinder is, for example, an air cylinder or an electric cylinder.

The journal block guide is a linear motion guide, for example, a guide shaft and a slide block, or a linear guide and a guide block.

One or both of the first journal block and the second journal block may be fixed to the top plate. The movable journal block is arranged on the linear guide. The linear motion guide is, for example, a combination of a slide shaft and a slide guide, a ball spline, or a linear guide.

The phase alignment block may be arranged in, for example, the top plate or the second journal block. When the workpiece is placed on the cleaning table, the phase alignment surface of the phase alignment block abuts the phase alignment surface of the workpiece. Preferably, the phase alignment block is used in combination with a phase pin.

Both ends of the workpiece are referred to as end portions, and a portion other than the end portions is referred to as a shaft portion. The outer peripheral surface mainly refers to a surface of the shaft portion, and includes an oil hole and an internal thread arranged in the shaft portion.

According to the cleaning apparatus of the present invention, the axially extending workpiece is clamped on the center axis to clean the end portion and the shaft portion of the workpiece.

### BRIEF DESCRIPTION OF DRAWINGS

FIG. 1 shows a schematic configuration of a cleaning apparatus according to a first embodiment.
FIG.2 is a perspective view of the workpiece of the first embodiment.
FIG.3 is a cross-sectional view of the cleaning apparatus of the first embodiment.
FIG.4 is a perspective view of a table of the first embodiment.
FIG.5 is a flowchart showing a cleaning method.
FIG.6A is a cross-sectional view showing the workpiece installation state in the first embodiment.
FIG. 6B is a perspective view showing a cleaning state of an end portion in the first embodiment.
FIG. 6C is a cross-sectional view showing a clamping state in the first embodiment.
FIG. 6D is a cross-sectional view showing a state in which a table in the first embodiment is retracted.
FIG. 6E is a perspective view showing a cleaning state of a shaft portion in the first embodiment.
FIG. 7 is a cross-sectional view of the cleaning apparatus of a second embodiment

### DETAILED DESCRIPTION

### First Embodiment

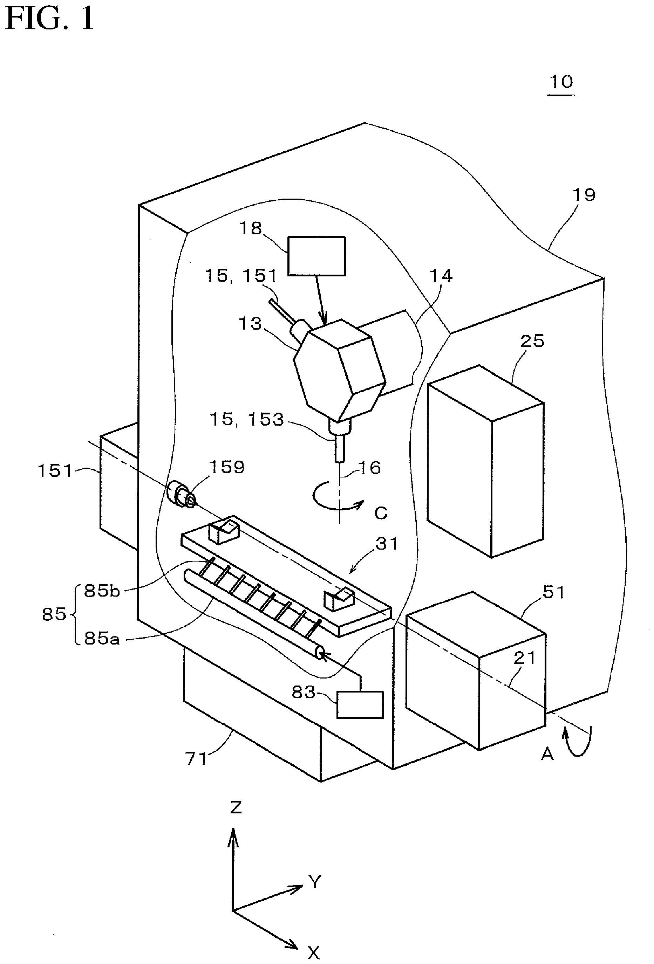

As shown in FIG. 1, the cleaning apparatus 10 includes a cleaning chamber 19, a table (cleaning table) 31, a clamp device (first clamp device) 51, a clamp device (second clamp device) 151, a lifter 71, a moving device 14, a nozzle (cleaning nozzle) 15, and a control device 25. The cleaning apparatus 10 may include a turret 13, a pump 18, an air source 83, and an air blowing device 85.

The clamp device 151 has a clamp shaft (second clamp shaft) 159. The clamp shaft 159 rotates about a cleaning axis 21. The moving device 14 moves the nozzle 15 relative to the workpiece 3.

The pump 18 is a liquid pump such as a piston pump, a gear pump, or a centrifugal pump. The pump 18 is supplied with cleaning liquid from a cleaning liquid tank (not shown) and supplies the cleaning liquid to the nozzle 15 via the turret 13.

The moving device 14 freely moves the turret 13 and the nozzle 15 in the left-right direction (X direction), the front-rear direction (Y direction), and the vertical direction (Z direction) with respect to the table 31.

The clamp devices 51, 151 clamp the workpiece 3 in the direction of the cleaning axis 21 and rotate about the cleaning axis 21 in the A direction.

The turret 13 is provided on the moving device 14. The turret 13 has a nozzle rotation axis 16 extending in the Z direction. The turret 13 may have a plurality of nozzles 15. The turret 13 pivots to select one of the nozzles 15. The turret 13 supplies the cleaning liquid to the selected nozzle 15. The moving device 14 or the turret 13 rotates the nozzle 15 about the nozzle rotation axis 16 in the C direction. As the turret 13, for example, Japanese Patent Nos. 6147623 and 5432943 have been proposed.

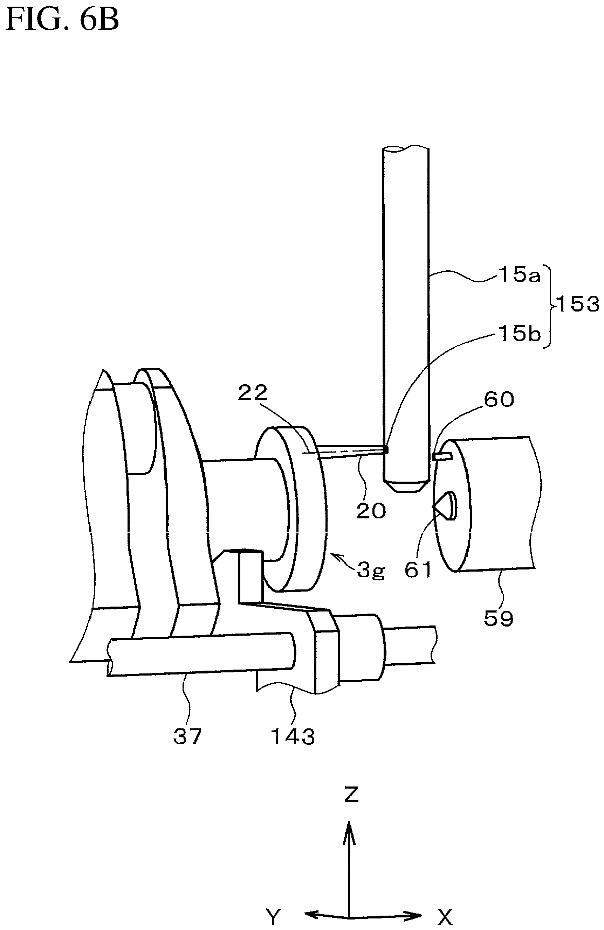

The nozzle 15 is provided in the turret 13. For example, as shown in FIG. 6B, the nozzles 15 includes a shaft 15a and a nozzle hole 15b. Preferably, the nozzle 15 rotates about the rotation axis 16 or the nozzle 15 is circumferentially positioned in a rotational direction. The nozzle 15 is, for example, an L-type nozzle 153 and a flat spray nozzle 155. The nozzle hole 15b injects the high-pressure jet 20 along an axis line 22.

The moving device 14 freely moves the turret 13 and the nozzle 15 in the left-right direction (X direction), the front-rear direction (Y direction), and the vertical direction (Z direction) with respect to the table 31.

The clamp devices 51, 151 clamp the workpiece 3 in the direction of the cleaning axis 21 and rotate about the cleaning axis 21 in the A direction.

The turret 13 is provided on the moving device 14. The turret 13 has a nozzle rotation axis 16 extending in the Z direction. The turret 13 may have a plurality of nozzles 15. The turret 13 pivots to select one of the nozzles 15. The turret 13 supplies the cleaning liquid to the selected nozzle 15. The moving device 14 or the turret 13 rotates the nozzle 15 about the nozzle rotation axis 16 in the C direction. As the turret 13, for example, Japanese Patent Nos. 6147623 and 5432943 have been proposed.

The nozzle 15 is provided in the turret 13. For example, as shown in FIG. 6B, the nozzles 15 includes a shaft 15a and a nozzle hole 15b. Preferably, the nozzle 15 rotates about the rotation axis 16 or the nozzle 15 is circumferentially positioned in a rotational direction. The nozzle 15 is, for example, an L-type nozzle 153 and a flat spray nozzle 155. The nozzle hole 15b injects the high-pressure jet 20 along an axis line 22.

The air source 83 is, for example, a compressor or a blower. The air blowing device 85 includes an air blowing pipe 85a and a plurality of air blowing nozzles 85b. The air blowing pipe 85a is disposed, for example, below the front of the cleaning chamber 29. The air blowing pipe 85a extends in parallel with the cleaning axis 21. The air blowing nozzles 85b extend from the air blowing pipe 85a toward the cleaning axis 21, and are arranged side by side in the left-right direction on the air blowing pipe 85a. The air blowing nozzle 85b is connected to the air source 83 via the air blowing pipe 85a.

The control device 25 controls the moving device 14, the clamp devices 51, 151, the lifter 71, the pump 18, and the air source 91.

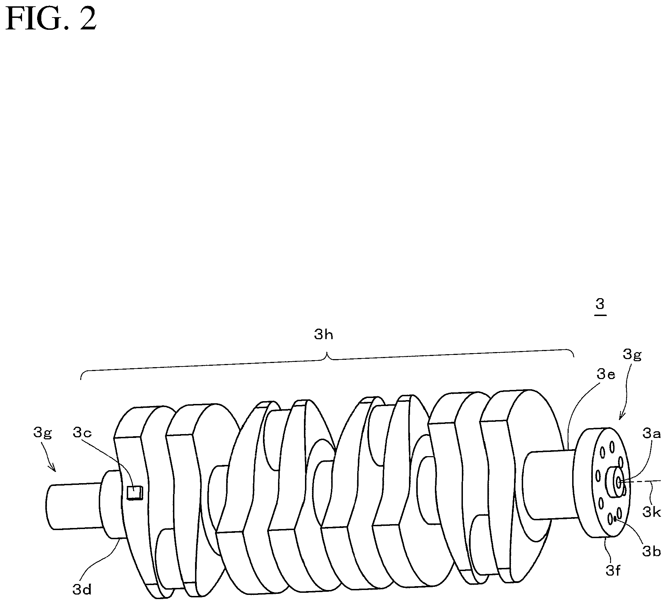

As shown in FIG. 2, the workpiece 3, which is a crankshaft, includes a flange 3f, a phase alignment surface 3 c, a journal (first journal) 3d, a journal (second journal) 3 e, a center hole 3 a, a phase alignment hole 3b, an end portion 3g, a shaft portion 3h, and a center axis 3k. When the workpiece 3 is placed in the cleaning apparatus 10, for example, the flange 3f is located at the right end from the front, and the phase alignment surface 3c is located at the left end. The journal 3d is located at the left end and the journal 3e is located at the right end. The center hole 3a is, for example, conical. The center holes 3a are arranged at both ends of the workpiece 3. The phase alignment hole 3b is, for example, a cylindrical hole arranged in the flange 3f away from the cleaning axis 21, and extends along the cleaning axis 21. The phase alignment surface 3c is, for example, a plane disposed on both sides of the cleaning axis 21. The center axis 3k is the rotational center of the workpiece 3.

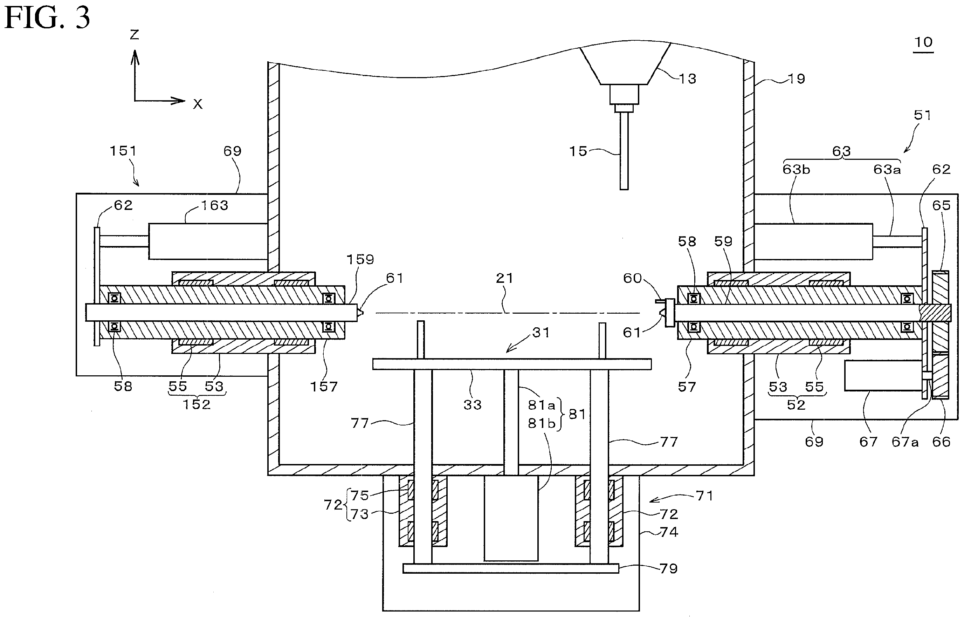

FIG. 3 is a cross-sectional view taken along the ZX plane passing through the cleaning axis 21. The table 31 is depicted in simplified form. As shown in FIG. 3, the clamp device 51 includes a guide bush (first guide bush) 52, a slide shaft (first slide shaft) 57, a bearing 58, a clamp shaft (first clamp shaft) 59, a motor (clamp shaft motor) 67, a driving gear 66, a driven gear 65, a connecting plate 62, and a clamp cylinder (first clamp drive device) 63. Preferably, the clamp device 51 includes a cover 69, a center pin 61 and a phase pin 60.

The guide bush 52 may include a housing 53 and a bush 55. The housing 53 has, for example, a hollow cylindrical shape, and is arranged coaxially with the cleaning axis 21. The housing 53 is disposed on the right side (one side) as viewed from the front, for example, through the cleaning chamber 19.

The slide shaft 57 has, for example, a hollow cylindrical shape, and is arranged coaxially with the cleaning axis 21. The slide shaft 57 slides in the bush 55 and reciprocates in the left-right direction. The slide shaft 57 has a bearing 58 therein. The clamp shaft 59 is cylindrical and is supported by the bearing 58. The clamp shaft 59 is arranged coaxially with the cleaning axis 21. The center pin 61 and the phase pin 60 are arranged on the distal end surface of the clamp shaft 59. Here, the distal end is an end on the side of the workpiece 3, and the basal end is an end on the side opposite to the workpiece 3. The center pin 61 has a conical shape and is arranged coaxially with the cleaning axis 21. The phase pin 60 is arranged at a position away from the cleaning axis 21 and parallel to the cleaning axis 21. The center pin 61 and the phase pin 60 are inserted into the center hole 3a and the phase alignment hole 3b of the workpiece 3, respectively. When inserted into the workpiece 3, the center pin 61 and the phase pin 60 abut against the center hole 3a and the phase alignment hole 3b.

The connecting plate 62 is arranged at the basal end of the slide shaft 57.

The clamp cylinder 63 includes a rod 63a and a cylinder 63b. For example, the cylinder 63b is connected to the cleaning chamber 19, and the rod 63a is connected to the connecting plate 62. The clamp cylinder 63 is an electric cylinder, and is numerically controlled by the control device 25. When the clamp cylinder 63 contracts, the slide shaft 57 advances (advances to the left). When the clamp cylinder 63 extends, the slide shaft 57 retreats (advances to the right).

The motor 67 is arranged on the connecting plate 62. The motor 67 has an output shaft 67a. The motor 67 is, for example, a servo motor.

The driving gear 66 is fixed to the output shaft 67a. The driven gear 65 is fixed to the clamp shaft 59. The driven gear 65 meshes with the driving gear 66. The driving gear 66 and the driven gear 65 are, for example, spur gears or helical gears.

Preferably, the clamp cylinder 63, the connecting plate 62, the driven gear 65, the driving gear 66, and the motor 67 are arranged outside the cleaning chamber 19.

The cover 69 is a safety cover, and covers the guide bush 52, the slide shaft (first slide shaft) 57, the driving gear 66, the driven gear 65, the connecting plate 62, the clamp cylinder 63, and the motor (clamp shaft motor) 67.

The clamp device 151 includes a guide bush (second guide bush) 152, a slide shaft (second slide shaft) 157, a bearing 58, a connecting plate 62, and a clamp cylinder (second clamp drive device) 163. Preferably, the clamp device 151 includes a cover 69 and a center pin 61. The clamp device 151 is arranged on the left side of the workpiece 3 as viewed from the front. The guide bush 152 has the same structure as the guide bush 52. The slide shaft 157 has the same structure as the slide shaft 57. The center pin 61 is arranged at the right end of the clamp shaft 159. The clamp cylinder 163 has the same structure as the clamp cylinder 63.

The lifter 71 includes a lift guide 72, a rod 77, and a lift cylinder 81. The lifter 71 may include a cover 74 and a connecting plate 79.

The lift guide 72 includes a housing 73 and a bush 75, and is arranged below the cleaning chamber 19. The housing 73 has a hollow cylindrical shape and is arranged in the vertical direction. The bush 75 is arranged inside the housing 73.

The rod 77 has, for example, a cylindrical shape. The rod 77 slides in the bush 75 and reciprocates in the vertical direction. The upper portion of the rod 77 is connected to the table 31. Preferably, the rod 77 is arranged through the bottom surface of the cleaning chamber 19. Preferably, a plurality of rods 77 are arranged.

The connecting plate 79 connects the lower end of the rod 77.

The lift cylinder 81 is arranged in the cleaning chamber 19. The lift cylinder 81 includes a cylinder 81b and a rod 81a. For example, the cylinder 81b is arranged on the bottom surface of the cleaning chamber 19. The distal end of the rod 81a is connected to the table 31. For example, the lift cylinder 81 is an electric cylinder, and is numerically controlled by the control device 25. When the lift cylinder 81 extends, the table 31 rises. When the lift cylinder 81 contracts, the table 31 lowers. The rod 81a may be connected to the connecting plate 79.

The cover 74 is a safety cover, and covers the rod 77, the lift guide 72, the lift cylinder 81 and the connecting plate 79.

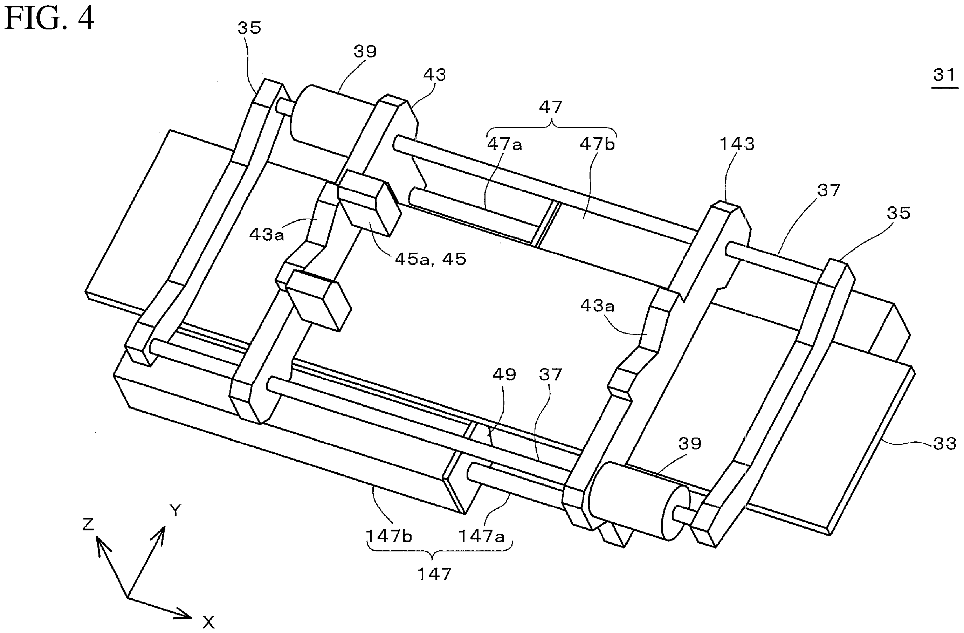

As shown in FIG. 4, the table 31 includes a top plate 33, a journal block (first journal block) 43, and a journal block (second journal block) 143. The table 31 may include an end plate 35, a pair of guide shafts 37, a phase alignment block 45, a slide block 39, a drive cylinder (first block drive cylinder) 47, a drive cylinder (second block drive cylinder) 147, and a bracket (cylinder bracket) 49.

The top plate 33 has a rectangular shape. The top plate 33 is fixed to the upper end of the rod 77. The top plate 33 is connected to the rod 81a.

The end plates 35 are arranged at both ends of the top plate 33 in the longitudinal (X) direction, and extend in the short (Y) direction.

The guide shaft 37 is a round bar. A pair of guide shafts 37 are arranged at both ends of the end plates, and extend across the two end plates 35 in the X direction.

The slide block 39 has a hollow cylindrical shape and passes through the guide shaft 37. The slide block 39 slides on the guide shaft 37 and slides in the X direction.

The journal block 43 is a V block and is L-shaped as viewed from the X direction. The journal block 43 has a V-surface 43a on the center top. One end (Y+ end) of the journal block 43 extends downward from the lower surface of the top plate 33. The V-surface 43a is arranged symmetrically to the XZ plane passing through the cleaning axis 21. The V-surface 43a abuts against the journals 3d of the workpiece 3. The journal block 43 is fixed to the slide block 39 and moves in the X direction together with the slide block 39. The guide shaft 37 passes through both ends of the journal block 43. The journal block 43 moves on the guide shaft 37 in the X direction.

For example, the phase alignment block 45 is located near the center of the journal block 43. The phase alignment block 45 has a phase alignment surface 45a. The phase alignment surfaces 45a are arranged on both sides of the cleaning axis 21, for example, in parallel with the XZ plane, toward the cleaning axis 21. The phase alignment surface 45a abuts the phase alignment surface 3c of the workpiece 3.

The journal block 143 is substantially the same as the journal block 43. However, the Y-direction end of the journal block 143 extends downward.

The drive cylinder 47 is arranged below Y+ side end portion of the top plate 33, and expands and contracts in the X direction. The drive cylinder 47 includes a cylinder 47b and a rod 47a. The cylinder 47b is fixed to the lower surface of the top plate 33 on the X+ side by, for example, a bracket 49. The rod 47a extends toward the X-side, and the distal end of the rod 47a is connected to the journal block 43. The drive cylinder 47 is an electric cylinder, and is numerically controlled by the control device 25.

The drive cylinder 147 is substantially the same as the drive cylinder 47. However, it is arranged at the Y- side end. The cylinder 147b is arranged on the X-side, and the rod 147a is connected to the journal block 143.

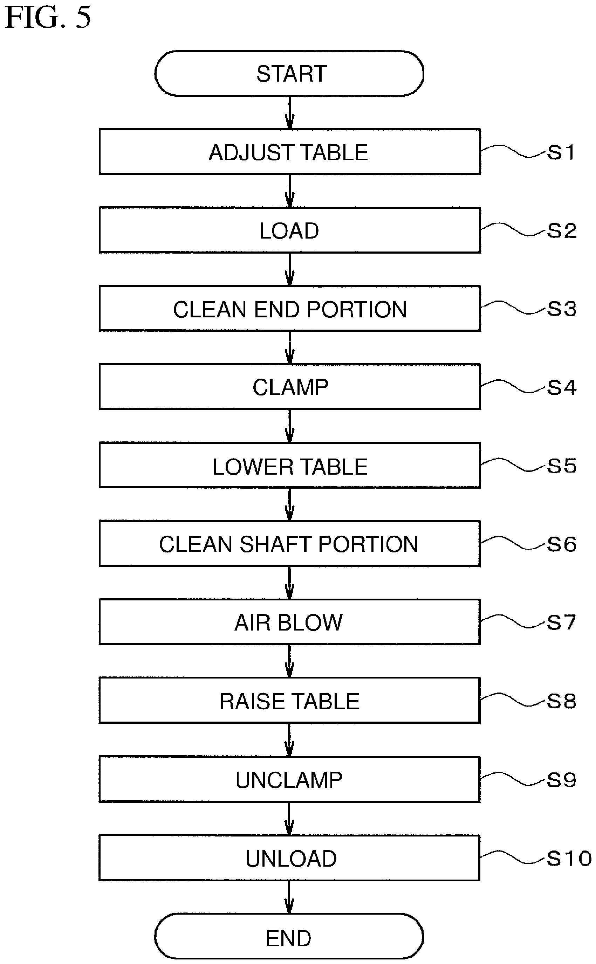

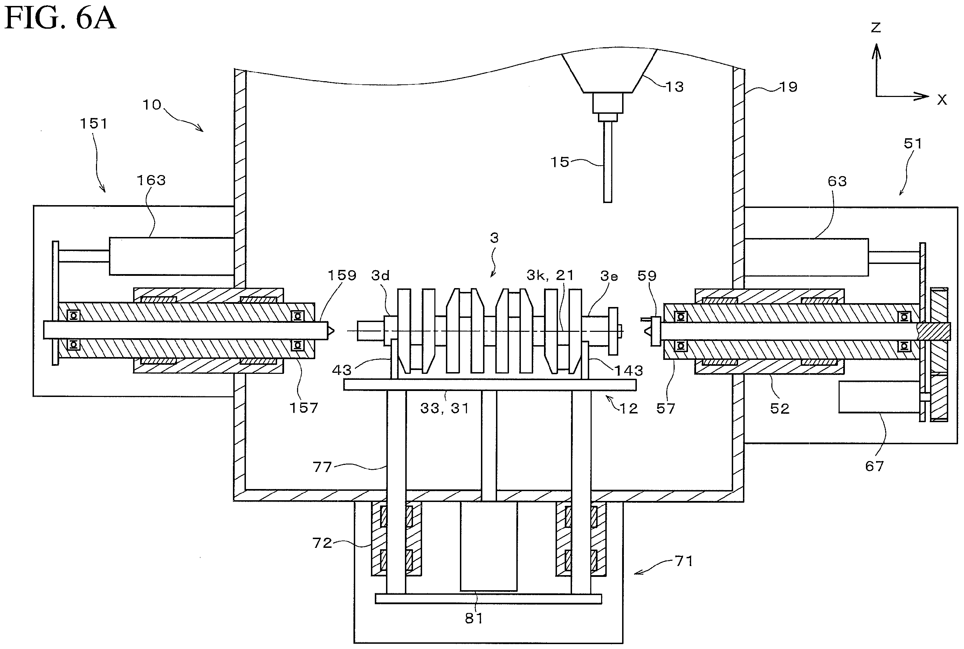

The cleaning method will now be described with reference to FIG. 5 and FIG. 6A to 6E.

First, the table 31 is adjusted in accordance with the workpiece 3. In step S1, the drive cylinders 47, 147 move the journal blocks 43, 143 such that the position of the journal blocks 43, 143 is aligned with the position of the journals 3d, 3e. The lifter 71 moves the table 31 to have the same height as a cleaning position 12. Here, the cleaning position 12 is a position where the center axis 3k of the workpiece 3 is aligned with the cleaning axis 21. The control device 25 controls the position of the journal blocks 43, 143 based on the position of the journal of the workpiece 3. The control device 25 controls the height of the table 31 based on the diameter of the journals 3d, 3e of the workpiece 3.

The workpiece 3 is loaded on the table 31 by a conveying device (not shown) or an operator in step S2. As shown in FIG. 6A, the journal 3d is aligned with the journal block 43, and the journal 3e is aligned with the journal block 143. The phase alignment surface 3c abuts the phase alignment surface 45a, and the phase of the workpiece 3 is aligned with the table 31.

The pump 18 supplies the cleaning liquid to the nozzle 15. The nozzle 15 ejects the cleaning liquid. As shown in FIG. 6B, the moving device 14 inserts the nozzles 15 between the clamp shafts 59, 159 and the workpiece 3, and causes the jet to impinge on the workpiece 3 to clean the end portion 3g of the workpiece 3 in step S3. Thereafter, the moving device 14 retracts the nozzle 15 upward.

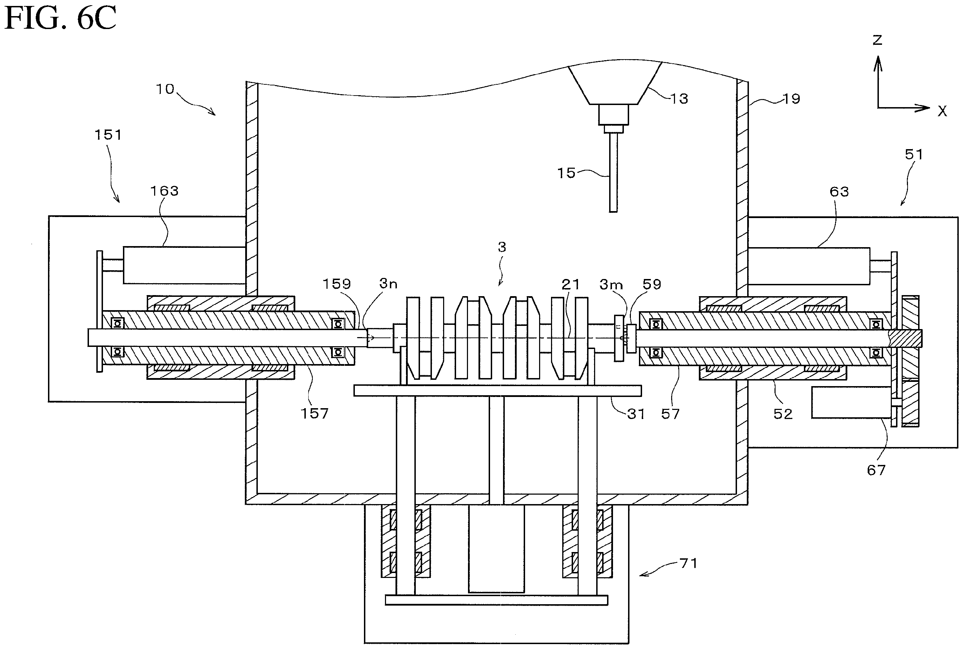

As shown in FIG. 6C, the clamp cylinder 63 advances the slide shaft 57. The clamp shaft 59 abuts against the first end 3m of the workpiece 3. The center pin 61 is inserted into the center hole 3a. The phase pin 60 is inserted into the phase alignment hole 3b. The clamp cylinder 63 presses the clamp shaft 59 against the first end 3m. The control device 25 controls the displacement of the clamp shaft 59 based on the position of the first end 3m. The clamp cylinder 163 advances the slide shaft 157. The clamp shaft 159 abuts the second end 3n of the workpiece 3. The clamp cylinder 163 presses the clamp shaft 159 to the second end 3n. The control device 25 controls the displacement of the clamp shaft 159 based on the position of the second end 3n. In step S4, the workpiece 3 is clamped by the clamp shafts 59, 159.

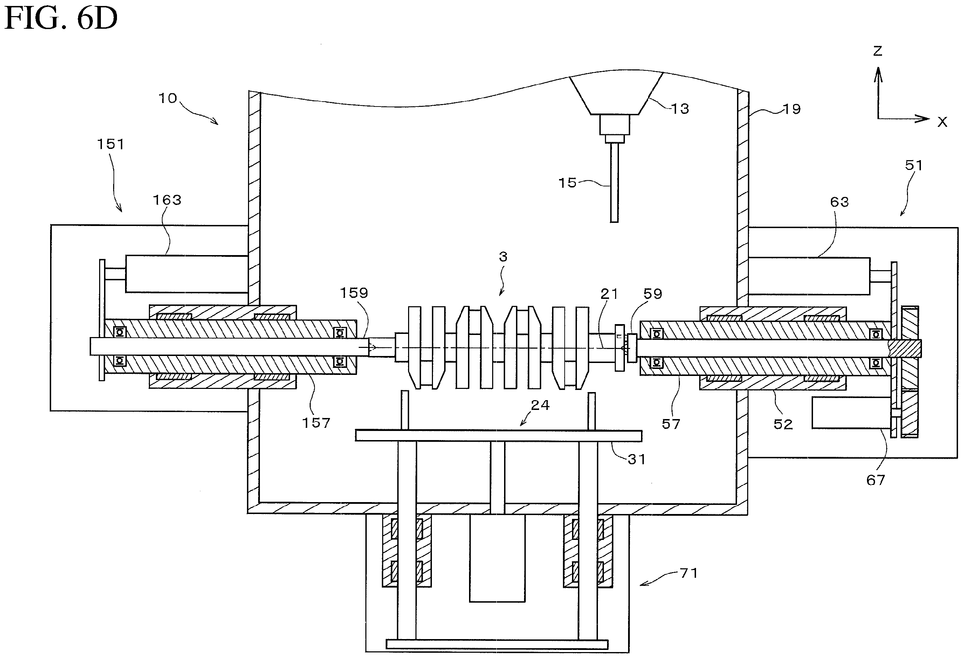

As shown in FIG. 6D, the lifter 71 lowers the table 31 to a retracted position 24 in step S5. Here, the retracted position 24 is a position where the workpiece 3 and the nozzle 15 do not interfere with the table 31 when the workpiece 3 rotates. The retracted position 24 may be the same position regardless of the type of the workpiece 3. For example, it is preferable to set the lowest end to the retracted position 24.

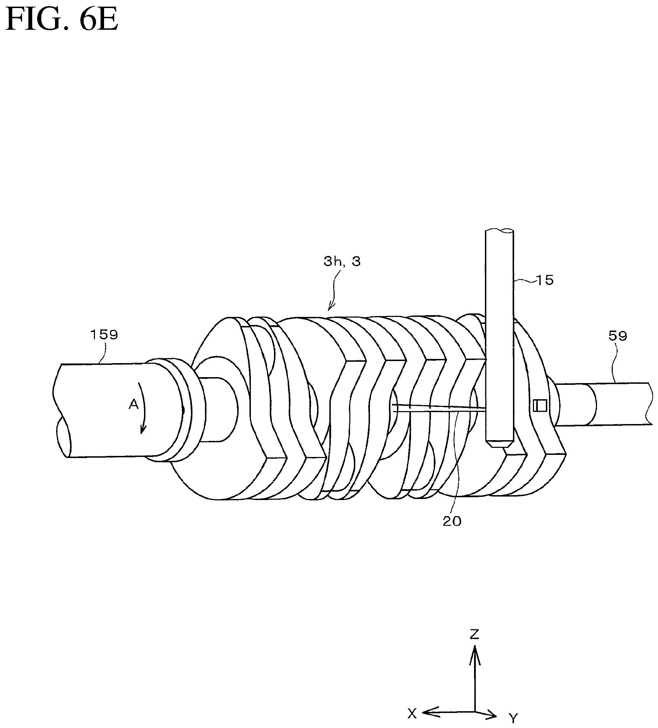

As shown in FIG. 6E, the moving device 14 moves the nozzles 15, collides the jet 20 with the workpiece 3 to clean the shaft portion 3h. At this time, the control device 25 appropriately rotates the workpiece 3 integrally with the clamp shafts 59, 159, or aligns the workpiece 3 in the rotational direction in step S6.

After completion of the cleaning, the workpiece is air-blown in step S7. The air blowing nozzle 85b ejects compressed air or dry air. The clamp shafts 59, 159 rotate the workpiece 3 as appropriate.

In step S8, the lifter 71 raises the table 31. The table 31 is raised to the cleaning position 12.

The clamp cylinders 63, 163 retract the slide shafts 57, 157, respectively. The clamp shafts 59, 159 are spaced apart from the workpiece 3. The workpiece 3 is unclamped and placed on the table 31 in step S9.

In step S10, the workpiece 3 is unloaded by the conveying device or the operator.

Steps S1 and S7 may be omitted.

According to the present embodiment, the workpiece 3 is clamped by the clamp shafts 59, 159 about the cleaning axis 21. The clamp shafts 59, 159 and the workpiece 3 rotate together. Since the table 31 is retracted downward when cleaning or air blowing is performed, cleaning or air blowing of the shaft portion 3h is not prevented. When the table 31 is raised, the nozzle 15 cleans the end portion 3g because the end portion 3g is exposed. Since the drive cylinders 47, 147 are numerically controlled electric cylinders, the distances between the journal 3d and the journal 3e can be adapted to any workpiece 3. Since the lift cylinder 81 is a numerically controlled electric cylinder, the center axis 3k of the workpiece 3 having different diameters of the journals 3d, 3e is aligned with the cleaning axis 21. Since the clamp cylinders 63, 163 are numerically controlled electric cylinders, the clamp shafts 59, 159 are brought into contact with the workpiece 3 having different lengths to clamp the workpiece 3 at a predetermined position.

Since the end portion 3g is cleaned while the workpiece 3 is placed on the table 31, and the workpiece 3 is clamped after the end portion 3g is cleaned, the clamp shafts 59, 159 are suppressed from becoming dirty. The workpiece 3 is cleaned while being sandwiched and supported by the clamp shafts 59, 159 through the cleaning axis 21. Since the table 31 is separated from the workpiece 3 when cleaning the shaft portion 3h, the nozzle 15 easily approaches to the workpiece 3 and efficiently cleans the workpiece 3. Since the workpiece 3 and the table 31 are separated from each other in the clamped state, and the workpiece 3 is rotated in a state in which the center axis 3k of the workpiece 3 and the cleaning axis 21 are aligned with each other, the inertia can be reduced.

### Second Embodiment

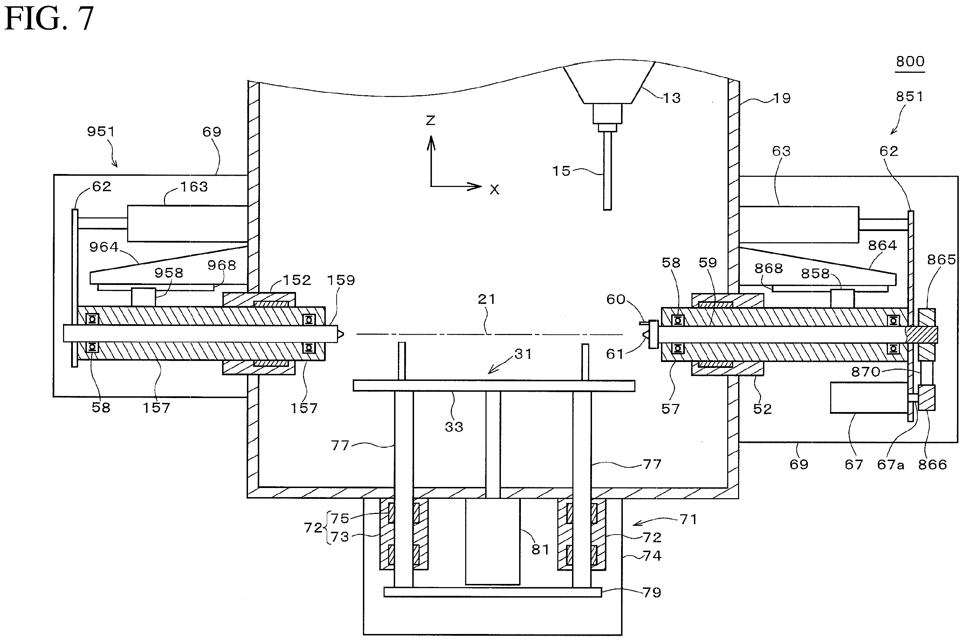

As shown in FIG. 7, the cleaning apparatus 800 according to the present embodiment includes a clamp device (first clamp device) 851 and a clamp device (second clamp device) 951.

The clamp device 851 includes a support (clamp guide support) 864, a linear guide (first linear guide) 868, a guide block 858, a driving pulley 866, a driven pulley 865, and an endless belt 870. The support 864 is a cantilever beam fixed to the side wall of the cleaning chamber 19. The linear guide 868 is fixed to the support 864 and extends parallel to the cleaning axis 21. The guide block 858 reciprocates on the linear guide 868. The guide block 858 is fixed to the slide shaft 57. The distal end of the slide shaft 57 is guided by the guide bush 52. The basal end of the slide shaft 57 is guided by the guide block 858.

The driving pulley 866 is a toothed pulley, and is fixed to the output shaft 67a. The driven pulley 865 is a toothed pulley, and is fixed to the clamp shaft 59. The endless belt 870 is a toothed belt, and spans between the driving pulley 866 and the driven pulley 865. The slide shaft 57 is guided by the guide bush 52 and the linear guide 868, and reciprocates in the left-right direction.

The clamp device 951 has a support 964, a linear guide (second linear guide) 968 and a guide block 958. The support 964, the linear guide 968, and the guide block 958 are substantially the same as the support 864, the linear guide 868, and the guide block 858. The guide block 958 is arranged on the linear guide 968, and is connected to the slide shaft 157.

According to the cleaning apparatus 800 of the present embodiment, since the basal end portion of the slide shaft 57 is guided by the linear guide 868 and the guide block 858, the degree of parallelism between the slide shaft 57 and the X-axis is improved. The same applies to the parallelism between the slide shaft 157 and the X-axis. Since the motor 67 and the clamp shaft 59 are connected by the toothed belt, there is no backlash. Since the cleaning apparatus 800 improves the static accuracy, the cleanliness is improved.

The present invention is not limited to the embodiments described above, and various modifications can be made without departing from the gist of the present invention, and all technical matters included in the technical idea described in the claims are the subject matter of the present invention. While the foregoing embodiments illustrate preferred examples, those skilled in the art will appreciate that various alternatives, modifications, variations, or improvements may be made in light of the teachings disclosed herein and are within the scope of the appended claims.

### Reference Signs List

- 3: Workpiece
- 10, 800: Cleaning apparatus
- 15: Nozzle (Cleaning nozzle)
- 21: Cleaning axis
- 31: Table (Cleaning table)
- 33: Top plate
- 51, 851: Clamp device (first clamp device)
- 57: Slide shaft (First slide shaft)
- 59: Clamp shaft (First clamp shaft)
- 63: Clamp cylinder (First clamp drive device)
- 67: Motor
- 151, 951: Clamp device (Second clamp device)
- 157: Slide shaft (Second slide shaft)
- 159: Clamp shaft (Second clamp shaft)
- 163: Clamp cylinder (Second clamp drive device)
- 71: Lifter

## Claims

1. A cleaning apparatus (10, 800) of cleaning a workpiece (3), the cleaning apparatus (10, 800) comprising:
a cleaning chamber (19) having a first side wall and a second side wall located opposite to the first side wall;
a top plate (33) arranged in the cleaning chamber (19);
a lifter (71) arranged in the cleaning chamber (19), the lifter (71) configured to move the top plate (33) between an upper cleaning position (12) and a lower retracted position (24);
a first slide shaft (57), the first slide shaft (57) configured to reciprocate along a cleaning axis (21);
a first clamp shaft (59) supported in the first slide shaft (57) in a rotatable manner around the cleaning axis (21), the first clamp shaft (59) configured to abut the workpiece (3);
a first clamp drive device (63) configured to reciprocate the first slide shaft (57);
a motor (67) configured to rotate the first clamp shaft (59);
a second clamp drive device (163) configured to reciprocate the second slide shaft (157); and
a cleaning nozzle (15) arranged in the cleaning chamber (19);
wherein
the first slide shaft (57) is arranged through the first side wall;
and the cleaning apparatus (10, 800) comprises
a second slide shaft (157) arranged through the second side wall, the second slide shaft (157) configured to reciprocate along the cleaning axis (21);
a second clamp shaft (159) supported in the second slide shaft (157) in a rotatable manner around the cleaning axis (21), the second clamp shaft (159) configured to abut the workpiece (3);
a guide shaft (37) arranged to the top plate (33), the guide shaft (37) extending in a left-right direction;
a first journal block (43) configured to move on the guide shaft (37);
a first block drive cylinder (47) arranged to the top plate (33), the first block drive cylinder (47) configured to drive the first journal block (43);
a second journal block (143) configured to move on the guide shaft (37); and
a second block drive cylinder (147) arranged to the top plate (33), the second block drive cylinder (147) configured to drive the second journal block (143).

2. The cleaning apparatus according to claim 1, further comprising:
a hollow first guide bush (52) arranged in the cleaning chamber (19) along the cleaning axis (21), the first guide bush (52) configured to slidably contain the first slide shaft (57); and
a hollow second guide bush (152) arranged in the cleaning chamber (19) along the cleaning axis (21), the second guide bush (152) configured to slidably contain the second slide shaft (157).

3. The cleaning apparatus according to claim 1 or 2, further comprising:
a first linear guide (868) arranged parallel to the cleaning axis (21), the first linear guide (868) configured to guide the first slide shaft (57); and
a second linear guide (968) arranged parallel to the cleaning axis (21), the second linear guide (968) configured to guide the second slide shaft (157).

4. The cleaning apparatus according to any one of claims 1 to 3, further comprising:
a moving device (14) configured to move the cleaning nozzle (15) with respect to the workpiece (3).

5. The cleaning apparatus according to any one of claims 1 to 4, wherein
the first clamp drive device (63) and the second clamp drive device (163) are numerically controlled electric cylinders.

6. The cleaning apparatus according to any one of claims 1 to 5, wherein
the first clamp shaft (59) is arranged through the first side wall,
the motor (67) is arranged outside the cleaning chamber (19), and
the second clamp shaft (159) is arranged through the second side wall.

7. The cleaning apparatus according to any one of claims 1 to 6, wherein
the first block drive cylinder (47) and the second block drive cylinder (147) are numerically controlled electric cylinders.

8. The cleaning apparatus according to any one of claims 1 to 7, wherein
the first journal block (43) includes a phase alignment block (45) having a phase alignment surface (45a).

9. The cleaning apparatus according to any one of claims 1 to 8, wherein
the first journal block (43) and the second journal block (143) each has a V-surface (43a).

10. The cleaning apparatus according to any one of claims 1 to 9, wherein
the lifter (71) includes
a lift guide (72) arranged in the cleaning chamber (19),
a rod (77) connected to the top plate (33) and arranged through a bottom surface of the cleaning chamber (19), the rod (77) configured to reciprocate together with the top plate (33) along the lift guide (72), and
a lift cylinder (81) configured to drive the rod (77).

11. The cleaning apparatus according to claim 10, wherein the lift cylinder (81) is a numerically controlled electric cylinder.

## Patentansprüche

1. Reinigungsvorrichtung (10, 800) zum Reinigen eines Werkstücks (3), wobei die Reinigungsvorrichtung (10, 800) aufweist:
eine Reinigungskammer (19) mit einer ersten Seitenwand und einer zweiten Seitenwand, die sich gegenüber der ersten Seitenwand befindet;
eine obere Platte (33), die in der Reinigungskammer (19) angeordnet ist;
einen Heber (71), der in der Reinigungskammer (19) angeordnet ist, wobei der Heber (71) konfiguriert ist, die obere Platte (33) zwischen einer oberen Reinigungsposition (12) und einer unteren zurückgezogenen Position (24) zu bewegen;
eine erste Gleitwelle (57), wobei die erste Gleitwelle (57) konfiguriert ist, sich entlang einer Reinigungsachse (21) hin- und herzubewegen;
eine erste Klemmwelle (59), die in der ersten Gleitwelle (57) drehbar um die Reinigungsachse (21) gelagert ist, wobei die erste Klemmwelle (59) konfiguriert ist, am Werkstück (3) anzuliegen;
eine erste Klemmantriebsvorrichtung (63), die konfiguriert ist, die erste Gleitwelle (57) hin- und herzubewegen;
einen Motor (67), der konfiguriert ist, die erste Klemmwelle (59) zu drehen;
eine zweite Klemmantriebsvorrichtung (163), die konfiguriert ist, die zweite Gleitwelle (157) hin- und
herzubewegen; und
eine Reinigungsdüse (15), die in der Reinigungskammer (19) angeordnet ist;
wobei
die erste Gleitwelle (57) durch die erste Seitenwand angeordnet ist;
und die Reinigungsvorrichtung (10, 800) aufweist:
eine zweite Gleitwelle (157), die durch die zweite Seitenwand angeordnet ist, wobei die zweite Gleitwelle (157) konfiguriert ist, sich entlang der Reinigungsachse (21) hin- und herzubewegen;
eine zweite Klemmwelle (159), die in der zweiten Gleitwelle (157) drehbar um die Reinigungsachse (21) gelagert ist, wobei die zweite Klemmwelle (159) konfiguriert ist, am Werkstück (3) anzuliegen;
eine Führungswelle (37), die an der oberen Platte (33) angeordnet ist, wobei sich die Führungswelle (37) in einer Links-Rechts-Richtung erstreckt;
einen ersten Lagerblock (43), der konfiguriert ist, sich auf der Führungswelle (37) zu bewegen;
einen ersten Blockantriebszylinder (47), der an der oberen Platte (33) angeordnet ist, wobei der erste Blockantriebszylinder (47) konfiguriert ist, den ersten Lagerblock (43) anzutreiben;
einen zweiten Lagerblock (143), der konfiguriert ist, sich auf der Führungswelle (37) zu bewegen; und
einen zweiten Blockantriebszylinder (147), der an der oberen Platte (33) angeordnet ist, wobei der zweite Blockantriebszylinder (147) konfiguriert ist, den zweiten Lagerblock (143) anzutreiben.

2. Reinigungsvorrichtung nach Anspruch 1, die ferner aufweist:
eine hohle erste Führungsbuchse (52), die in der Reinigungskammer (19) entlang der Reinigungsachse (21) angeordnet ist, wobei die erste Führungsbuchse (52) konfiguriert ist, die erste Gleitwelle (57) verschiebbar aufzunehmen; und
eine hohle zweite Führungsbuchse (152), die in der Reinigungskammer (19) entlang der Reinigungsachse (21) angeordnet ist, wobei die zweite Führungsbuchse (152) konfiguriert ist, die zweite Gleitwelle (157) gleitend aufzunehmen.

3. Reinigungsvorrichtung nach Anspruch 1 oder 2, die ferner aufweist:
eine erste Linearführung (868), die parallel zur Reinigungsachse (21) angeordnet ist, wobei die erste Linearführung (868) konfiguriert ist, die erste Gleitwelle (57) zu führen; und
eine zweite Linearführung (968), die parallel zur Reinigungsachse (21) angeordnet ist, wobei die zweite Linearführung (968) konfiguriert ist, die zweite Gleitwelle (157) zu führen.

4. Reinigungsvorrichtung nach einem der Ansprüche 1 bis 3, die ferner aufweist:
eine Bewegungsvorrichtung (14), die zum Bewegen der Reinigungsdüse (15) in Bezug auf das Werkstück (3) konfiguriert ist.

5. Reinigungsvorrichtung nach einem der Ansprüche 1 bis 4, wobei
die erste Klemmantriebsvorrichtung (63) und die zweite Klemmantriebsvorrichtung (163) numerisch gesteuerte Elektrozylinder sind.

6. Reinigungsvorrichtung nach einem der Ansprüche 1 bis 5, wobei
die erste Klemmwelle (59) durch die erste Seitenwand angeordnet ist, der Motor (67) außerhalb der Reinigungskammer (19) angeordnet ist und die zweite Klemmwelle (159) durch die zweite Seitenwand angeordnet ist.

7. Reinigungsvorrichtung nach einem der Ansprüche 1 bis 6, wobei der erste Blockantriebszylinder (47) und der zweite Blockantriebszylinder (147) numerisch gesteuerte Elektrozylinder sind.

8. Reinigungsvorrichtung nach einem der Ansprüche 1 bis 7, wobei der erste Lagerblock (43) einen Phasenausrichtungsblock (45) mit einer Phasenausrichtungsfläche (45a) aufweist.

9. Reinigungsvorrichtung nach einem der Ansprüche 1 bis 8, wobei der erste Lagerblock (43) und der zweite Lagerblock (143) jeweils eine V-Fläche (43a) aufweisen.

10. Reinigungsvorrichtung nach einem der Ansprüche 1 bis 9, wobei
der Heber (71) aufweist:
eine in der Reinigungskammer (19) angeordnete Hubführung (72),
eine Stange (77), die mit der oberen Platte (33) verbunden und durch eine Bodenfläche der Reinigungskammer (19) angeordnet ist, wobei die Stange (77) konfiguriert ist, sich zusammen mit der oberen Platte (33) entlang der Hubführung (72) hin- und herzubewegen, und
einen Hubzylinder (81), der konfiguriert ist, die Stange (77) anzutreiben.

11. Reinigungsvorrichtung nach Anspruch 10, wobei der Hubzylinder (81) ein numerisch gesteuerter Elektrozylinder ist.

## Revendications

1. Appareil de nettoyage (10, 800) pour nettoyer une pièce (3), ledit appareil de nettoyage (10, 800) comprenant :
une chambre de nettoyage (19) ayant une première paroi latérale et une deuxième paroi latérale située à l'opposé de la première paroi latérale ;
une plaque supérieure (33) disposée dans la chambre de nettoyage (19) ;
un dispositif de levage (71) placé dans la chambre de nettoyage (19), ledit dispositif de levage (71) étant prévu pour déplacer la plaque supérieure (33) entre une position supérieure de nettoyage (12) et une position inférieure de retrait (24) ;
un premier arbre coulissant (57), ledit premier arbre coulissant (57) étant prévu pour effectuer un mouvement de va-et-vient le long d'un axe de nettoyage (21) ;
un premier arbre de serrage (59) supporté par le premier arbre de coulissement (57) de manière rotative autour de l'axe de nettoyage (21), ledit premier arbre de serrage (59) étant prévu pour venir en butée contre la pièce à usiner (3) ;
un premier dispositif d'entraînement de serrage (63) prévu pour faire tourner le premier arbre coulissant (57) ;
un moteur (67) prévu pour faire tourner le premier arbre de serrage (59) ;
un deuxième dispositif d'entraînement de serrage (163) prévu pour faire aller et venir le deuxième arbre coulissant (157) ; et
une buse de nettoyage (15) disposée dans la chambre de nettoyage (19) ; où
le premier arbre coulissant (57) traverse la première paroi latérale ;
et où l'appareil de nettoyage (10, 800) comprend un deuxième arbre coulissant (157) traversant la deuxième paroi latérale, ledit deuxième arbre coulissant (157) étant prévu pour effectuer un mouvement de va-et-vient le long de l'axe de nettoyage (21) ;
un deuxième arbre de serrage (159) supporté par le deuxième arbre coulissant (157) de manière rotative autour de l'axe de nettoyage (21), ledit deuxième arbre de serrage (159) étant prévu pour venir en butée contre la pièce à usiner (3) ;
un arbre de guidage (37) disposé sur la plaque supérieure (33), ledit arbre de guidage (37) s'étendant dans une direction gauche-droite ;
un premier bloc de tourillon (43) prévu pour se déplacer sur l'arbre de guidage (37) ;
un premier cylindre d'entraînement de bloc (47) disposé sur la plaque supérieure (33), ledit premier cylindre d'entraînement de bloc (47) étant prévu pour entraîner le premier bloc de tourillon (43) ;
un deuxième bloc de tourillon (143) prévu pour se déplacer sur l'arbre de guidage (37) ; et
un deuxième cylindre d'entraînement de bloc (147) disposé sur la plaque supérieure (33), ledit deuxième cylindre d'entraînement de bloc (147) étant prévu pour entraîner le deuxième bloc de tourillon (143).

2. Appareil de nettoyage selon la revendication 1, comprenant en outre
une première douille de guidage creuse (52) disposée dans la chambre de nettoyage (19) le long de l'axe de nettoyage (21), ladite première douille de guidage (52) étant prévue pour contenir de manière coulissante le premier arbre coulissant (57) ; et
une deuxième douille de guidage creuse (152) disposée dans la chambre de nettoyage (19) le long de l'axe de nettoyage (21), ladite deuxième douille de guidage (152) étant prévue pour contenir de manière coulissante le deuxième arbre coulissant (157).

3. Appareil de nettoyage selon la revendication 1 ou la revendication 2, comprenant en outre :
un premier guidage linéaire (868) disposé parallèlement à l'axe de nettoyage (21), ledit premier guidage linéaire (868) étant prévu pour guider le premier arbre coulissant (57) ; et
un deuxième guidage linéaire (968) disposé parallèlement à l'axe de nettoyage (21), ledit deuxième guidage linéaire (968) étant prévu pour guider le deuxième arbre coulissant (157) .

4. Appareil de nettoyage selon l'une des revendications 1 à 3, comprenant en outre :
un dispositif de déplacement (14) prévu pour déplacer la buse de nettoyage (15) par rapport à la pièce (3).

5. Appareil de nettoyage selon l'une des revendications 1 à 4, où
le premier dispositif d'entraînement de serrage (63) et le deuxième dispositif d'entraînement de serrage (163) sont des cylibdres électriques à commande numérique.

6. Appareil de nettoyage selon l'une des revendications 1 à 5, où
le premier arbre de serrage (59) traverse la première paroi latérale,
le moteur (67) est placé à l'extérieur de la chambre de nettoyage (19), et
le deuxième arbre de serrage (159) traverse la deuxième paroi latérale.

7. Appareil de nettoyage selon l'une des revendications 1 à 6, où le premier cylindre d'entraînement de bloc (47) et le deuxième cylindre d'entraînement de bloc (147) sont des cylindres électriques à commande numérique.

8. Appareil de nettoyage selon l'une des revendications 1 à 7, où le premier bloc de tourillon (43) comprend un bloc d'alignement de phase (45) ayant une surface d'alignement de phase (45a).

9. Appareil de nettoyage selon l'une des revendications 1 à 8, où le premier bloc de tourillon (43) et le deuxième bloc de tourillon (143) présentent chacun une surface en V (43a).

10. Appareil de nettoyage selon l'une des revendications 1 à 9, où
le dispositif de levage (71) comprend
un guidage de course (72) disposé dans la chambre de nettoyage (19),
une tige (77) raccordée à la plaque supérieure (33) et traversant une surface inférieure de la chambre de nettoyage (19), ladite tige (77) étant prévue pour effectuer un mouvement de va-et-vient avec la plaque supérieure (33) le long du guidage de course (72), et
un cylindre de levage (81) prévu pour entraîner la tige (77) .

11. Appareil de nettoyage selon la revendication 10, où le cylindre de levage (81) est un cylindre électrique à commande numérique.
